## Europäisches Patentamt

## European Patent Office

## Office européen des brevets

(11) Publication number: **0 072 179**
**B1**

(12) **EUROPEAN PATENT SPECIFICATION**

(45) Date of publication of patent specification: **19.11.87**

(51) Int. Cl.⁴: **G 06 F 12/08**

(21) Application number: **82304086.0**

(22) Date of filing: **03.08.82**

(54) **Clearing invalid addresses in cache memory.**

(30) Priority: **03.08.81 US 289663**

(43) Date of publication of application:
**16.02.83 Bulletin 83/07**

(45) Publication of the grant of the patent:
**19.11.87 Bulletin 87/47**

(84) Designated Contracting States:
**BE DE FR GB IT SE**

(56) References cited:
**GB-A-2 015 216**
**GB-A-2 065 941**
**US-A-4 142 234**

(73) Proprietor: **Honeywell Bull Inc.**
**3800 W. 80th Street**
**Minneapolis Minnesota 55431 (US)**

(72) Inventor: **Webster, Marvin K.**
**5403 W. Monte Cristo Ave.**
**Glendale Arizona (US)**
Inventor: **Flynn, Richard T.**
**8202 W. Acoma Avenue**
**Peoria Arizona (US)**
Inventor: **Porter, Marion G.**
**322 West Encanto Boulevard**
**Phoenix Arizona (US)**
Inventor: **Seminsky, George M.**
**525 E.LeMarche Ave**
**Phoenix Arizona (US)**

(74) Representative: **Geissler, Bernhard, Dr. Patent-
und Rechtsanwälte et al
Bardehle-Pagenberg-Dost- Altenburg-
Frohwitter & Partner Postfach 86 06 20
D-8000 München 86 (DE)**

## Description

This invention relates to cache memories for data processing systems.

A cache memory is a relatively small, high speed unit, for temporary storage of data words, which can be accessed by an associated central processing unit (CPU) more rapidly than a main memory. Data frequently used by the CPU is duplicated in the cache memory. Thus when the CPU requires a word, a directory, forming a portion of the cache memory and containing the address of each valid word in the cache memory, is first examined, and if the desired word is found to be stored in the cache memory, then it is transferred to the CPU without accessing the main memory. If the desired word is not found in the cache memory, then the word must be transferred from the main memory to the CPU. Depending on the strategy utilized for the cache memory, words transferred to the CPU can be stored in the cache memory during the transfer from the main memory to the CPU.

Because a plurality of processors as well as a plurality of peripheral devices can have access to the main memory, the words currently in the main memory are subject to change and consequently the words in a cache memory unit, identified to the CPU only by an equivalent of the main memory location address, will no longer be an accurate reflection of the information signals actually at the main memory location. To avoid inconsistencies that can arise when a word in main memory is different from the word with the same address in the cache memory, the word currently stored in the main memory location is assumed to be the correct word. Words in the cache memory that have main memory location addresses at which the words have been independently altered must be rendered unavailable to the associated CPU of the data processing system.

The operation which can accomplish this purpose is a cache memory clearing operation wherein the contents of all the cache memories are made unavailable to the CPUs whenever an operation changing data in the main memory unit is identified. However, this process is clearly inefficient because valid data and invalid data in the cache memory units are rendered unavailable to the CPUs indiscriminately.

Many data processing systems utilize segmentation and paging techniques when manipulating data in the main memory. Segments (or portions) of the main memory refer to groups of words having some selected relationship. The main memory segments are further divided into pages which are groups of words (i.e. of the related segment of a predetermined dimension). Thus, in the cache memory unit that stores data by page address, when the data of a selected page address can be changed by operation involving the main memory, the related data having that selected page address stored in the cache memory units is rendered unavailable to the CPUs.

Again, this type of invalidation or clearing of the cache memory data is inefficient because of insufficient granularity of the cache memory storage location clearing mechanism.

It is also possible to provide directories that duplicate the actual directory location in the cache memory unit. The data processing system can, when specified activities are performed in the main memory, examine a duplicate directory and determine if the data stored in the related cache memory storage location can be affected by the main memory operation. In the event that the validity of the contents of the cache memory is compromised, then the contents of the actual cache memory storage location, in response to signals from the related duplicate directory, are altered so that the data compromised by the main memory operation is no longer available to the affected CPUs of the data processing system. This method of insuring accuracy of the cache memory contents requires a large amount of additional apparatus.

The main object of the present invention is to provide improved cache memory clearing for the cache memories associated with each processor of a data processing system.

From US patent 4,142,234 (Bean) a memory arrangement is known for filtering out unnecessary interrogations of cache directories in a multiprocessor system employing a buffer invalidation address stack (BIAS), each associated with a filter memory which records the cache block address in each invalidation request which is transferred to its associated BIAS. This memory arrangement requires a full cache cycle, or even two, to effect each clearing of the cache, and "steals" one cycle to interrogate the directory, and "steals" two cycles if the invalid address is found in the directory. During each "stolen" cycle, the local CPU cannot access the cache. This mode of filtering out the same immediately following invalid address requires full cache cycles aiming at limiting the cycle stealing.

The British patent 2,015,216 discloses the use of a split CPU cycle in which the full cache cycle is less than one-half of a CPU cycle. This allows a CPU access request to be completed by the cache in the first one-half processor cycle or, if the address is not found in the cache, to have it completed by the main memory in the second one-half processor cycle. Such a temporal relationship allows repeated CPU cache accesses (during each CPU cycle) without the delay for memory retrieval if the request accessed is not available in the cache. No provision is made for an invalid address clearing of the cache directory which is the main objective of the subject invention.

Accordingly, the main object of the present invention is to provide improved cache memory clearing for the cache memories associated with each processor of a data processing system, providing a cache memory which is operable in a cycle of two sequential phases and a directory to which a desired address may be applied in the first phase to determine whether or not the word with that address is stored in the cache memory, and a cache store in which the word may then be accessed in the second phase if is has been found that the word is stored in the cache memory.

The cache memory of this invention is characterized by means for searching the directory for invalid addresses for the purpose of clearing said invalid addresses during the second phase of the cache cycle when the access of desired words from the cache store takes place for which function the directory is idle.

An embodiment of the invention will now be described, by way of example, with reference to the accompanying drawings, in which:

Figure 1 is a block diagram of a data processing system;

Figure 2 is a block diagram of a cache memory unit and associated units of that system; and

Figure 3 is a more detailed block diagram of the cache memory unit.

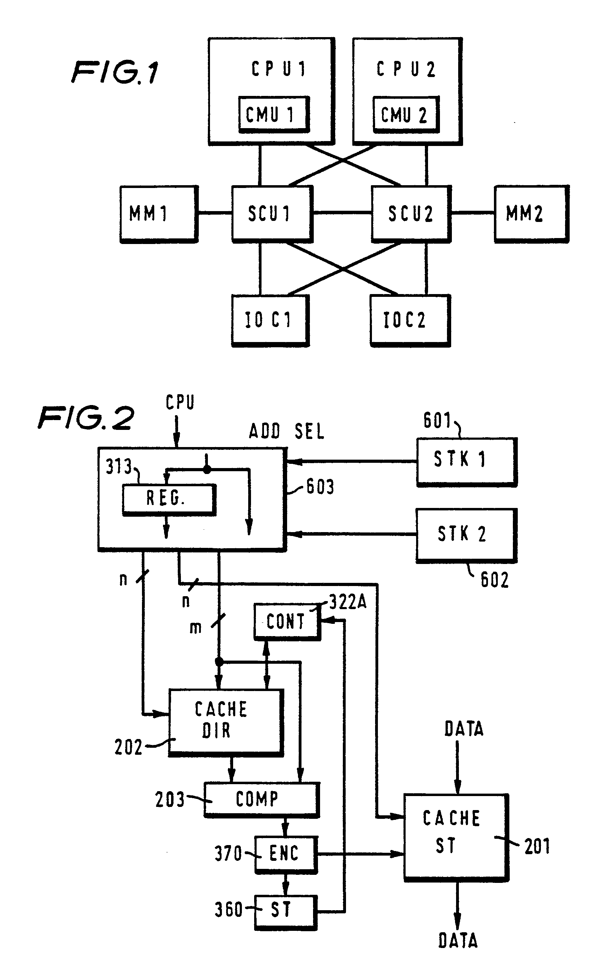

Figure 1 shows the basic architecture of a data processing system. Two central processing units CPU1 and CPU2 are each coupled to two system controller units SCU1 and SCU2, which are coupled together. Two main memory units MM1 and MM2 are coupled to SCU1 and SCU2 respectively. Two input/output Controllers IOC1 and IOC2 are each coupled to the two system control units SCU1 and SCU2. Each of the CPUs include a respective cache memory unit CMU1 and CMU2.

Either CPU can request information from the main memory (a Read command) or can store information in a main memory (a Write command) at a selected address. The Read and Write command signals are applied to the cache memory associated with the CPU issuing the command. The Read command initiates a search in the cache directory utilizing the address which is provided by the CPU as part of the command. If the address is found in the cache memory, the corresponding word stored in the cache memory is transferred to the CPU and the request to the main memory is not completed. If the address is not found in the cache memory, the Read command is transferred to the system controller unit and then to the main memory. The word at the required main memory address is transferred via the system controller unit to the central processing unit. In addition, the word is generally stored in the cache memory and its address in the cache directory, so that if the word is needed in another operation, it is now available to the CPU from the cache memory unit.

During a write command initiated by the CPU, the word written into the main memory at the location determined by the address can also be stored in the cache memory unit if found in the cache memory directory identified by the main memory location address.

To avoid inconsistencies in data processing results, all of the words stored in the cache memory unit should reflect the corresponding signal groups in the main memory. Several activities can occur which result in words in the cache memory unit being different from words with the same addresses actually in the main memory location. For example, data from one of the peripheral devices can be transferred through a SCU to a main memory location previously containing data stored in a cache memory unit. Similarly, when for example CPU1 issues a Write command to main memory MM1, the associated cache memory unit CMU1 will store the updated version of the data. However, the data from this location may also be stored in cache memory unit CMU2 associated with CPU2. The data in the cache memory unit CMU2 must either be updated or rendered unavailable to CPU2.

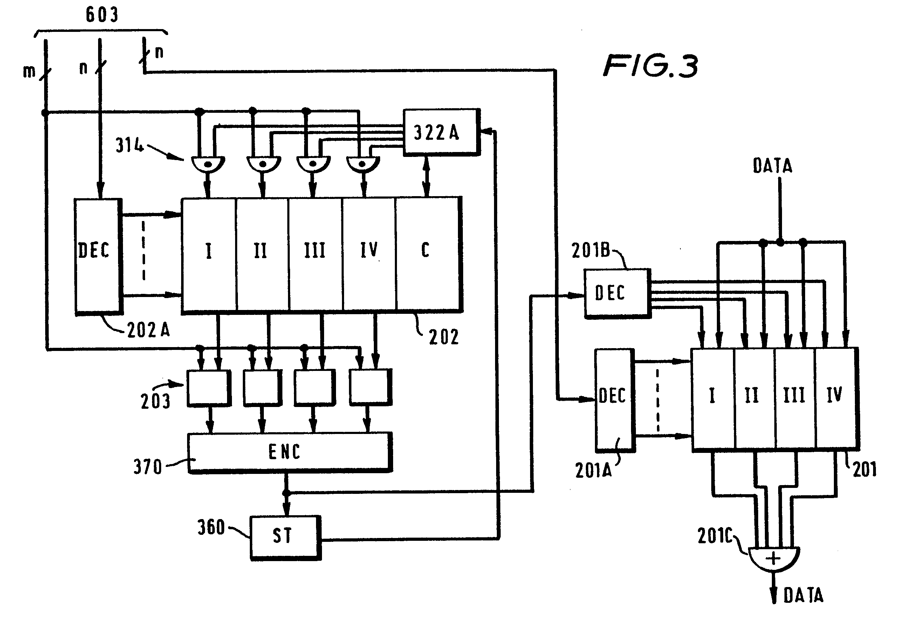

Figure 2 is a block diagram showing the cache memory unit CMU1 and associated units, and Figure 3 shows parts of the cache memory unit in more detail. As shown in Figure 2, the cache memory comprises a storage unit 201, a directory 202, and a comparator unit 203. The cache is responsive to an address fed to it of m + n bits, and divides the address into two parts, of m and n bits respectively, which are treated differently. The cache store 201 and the cache directory 202 are each divided into n distinct locations and the n-bit part of the address addresses the corresponding one of the n locations in both the store and the directory. Each location, in both the store and the directory, is divided into 4 sections or levels. The 4 levels in the store contain 4 words of data, and the 4 levels in the directory contain the m-bit address portions of these 4 words.

For a read operation, therefore, the n-bit address portion is applied to decoder 202A (Figure 3) to select a location in the directory 202, and the contents of the 4 levels I to IV are read out. That is, the 4 m-bit address portions of the 4 data words stored in the corresponding location in the store 201 are read out. These 4 m-bit address portions are fed to 4 comparators 203, which are also fed with the m-bit address portion of the required address. If the m-bit portion read out from one of the 4 levels of the directory matches the m-bit portion of the desired address from the address selector 603, this is detected by the comparators 203, and the level of the match is encoded by a level encoder 370. A control signal is also generated to abort or prevent a main memory access for the desired word.

In the event of a match by the comparators 203, the encoded level is fed to a decoder 201B to select one of the corresponding 4 levels of the cache data store 201. The n-bit address portion which was fed to decoder 202A is also fed to decoder 201A to select the corresponding location in the store 201. The desired word, which is stored in the selection location at the selected level, is read out via a set of OR gates 201C and fed to the CPU.

For a write operation for a word which is already stored in the cache memory, substantially the same sequence of events is followed, except that the word is written into the selected level of the selected location of the store 201 instead of being read out.

In addition to the 4 m-bit address portions stored in the 4 levels of each location in the directory 202, each location can also contain control signals C. These may include signals related to the replacement algorithm for storing information into the cache when all the levels already have data stored therein. One control signal stored in the cache directory is a full/empty signal which, when set to full, indicates that valid data is stored in the corresponding level in the cache storage unit, and when set to empty, indicates that the corresponding level in the cache storage unit is either empty or contains an invalid signal group. The use of the full/empty control signal eliminates the need to physically remove of clear a signal group stored in the cache storage unit which is invalid.

The data store 201 and the directory 202 are each operable to have information either read from them or written in them. During a read operation, the full/empty signal from the selected location in the control section C of the directory 202 is fed to the comparators 203. If the full/empty signal indicates full, then the comparison can take place. If the full/empty signal indicates empty, then the word in the cache storage unit, even if the main memory address is found in the cache directory, is invalid and no match is signalled. If the full/empty signal indicates valid data and if one of the m-bit address portions from directory 202 matches the m-bit desired address portion, the level encoder 370 transforms the directory level into address signals which will identify and activate the corresponding level in the cache storage unit (thereby providing the desired word).

For a write operation into one of the levels of the cache memory, the gates 314 are enabled, so that the m-bit address portion is applied to all levels of the directory. Control signals activate only one level of the cache directory level for writing (the storage section C will always be activated) so that the m-bit address portion is written only into the selected one of the storage levels and control signals are written into storage section C.

In order to determine if invalid data is stored in the cache memory unit, an address is read in through address selector 603. The operation to determine if the main memory address of the invalid data is present is similar to the read operation. If the address is found stored in one of the levels of the cache memory unit directory, the full/empty signal in the control section corresponding to the identified level containing the main memory address is altered to indicate that the invalid word is in the corresponding location at the identified level in store 201.

There may conveniently be a path, not shown, around the cache storage unit 201 so that in a write operation, a word obtained from main memory can by-pass the cache memory completely and proceed directly to the CPU from the main memory.

The essential feature of this operation for present purposes is the timing. A cache cycle consists, for a word in the cache, of two successive halves. In the first half of the cycle, the n-bit address portion is used to read out a location in the cache directory 202, and the m-bit address portion is compared with the stored m-bit address portions. If there is a match, then in the second half of the cache cycle, the n-bit address portion is used to address a location in the cache store 201, and the level indication from the directory is used to select the required word in that location.

It will be realized that the directory is not being used during the second half of the cache cycle. Since the two halves of the cache cycle are roughly equal, this means that the directory is idle for roughly half the time. The present system utilizes this idle 50% of directory time for the purpose of clearing invalid addresses.

As shown in Figure 2, the cache has two invalid address stacks 601 and 602 associated with it. The cache shown is cache CMU1 in CPU1 (Figure 1). Stack STK1, 601, is used to store addresses in main memory MM1 accessed by units other than CPU1, i.e. by units CPU2, IOC1, and IOC2. Similarly, stack STK2 is used to store addresses in main memory MM2 accessed by those same units. (Cache CMU2 in CPU2 has its own two stacks, not shown, associated with it for storing memory accesses from units other than CPU2).

The cache store has, as already noted, an address selector unit 603, which is fed from the CPU (CPU1) and from the two stacks STK1 and STK2. This address selector 603 includes a memory register 313, and a by-pass route around that register. When a cache cycle is initiated by the CPU, the required address is passed from the CPU to the address selector 603, and stored therein in the register 603. The m-bit portion of the address is therefore available for the first half of the cache cycle, and the n-bit address portion is available throughout the whole of the cache cycle, i.e. for both the first and second halves. The cache cycle can therefore proceed as discussed above. However, the by-pass path around the regsiter 313 allows a second address, from one or other of the stacks STK1 and STK2, to be fed to the cache during the second half of the cycle.

If either or both of the stacks STK1 and STK2 contains an address of invalid data — i.e. an address which has been written in in one or other of the main memories, so that if that address is also in the cache, the data for that address in the cache has been changed and is therefore invalid, then that address is selected during the second half of a cache cycle. The selection of the stack may be made, for example, according to which stack contains more addresses. This address has its n-bit portion used to select a location in the directory, and its m-bit portion used for comparison with the stored m-bit portions in that location. This directory search occurs during the second half of the cache cycle, while the word desired by the CPU is being accessed in the cache store 201.

If the invalid address search fails, i.e. the invalid address is found not to be in the cache, then that address is simply deleted from the stack, and the cache is free to start afresh on the next cycle. However, if the search succeeds, i.e. the invalid address is found to be in the cache, then the level containing the invalid address is stored in a level store 360. This search and store operation for the invalid address occupies the second half of the cache cycle. The cache has therefore completed its normal cycle, and a fresh cache cycle starts, with a new address being fed to it from the CPU.

This second cycle proceeds as usual, with the directory search being carried out during the first half and the word being accessed during the second half. During this second half, the directory is again free. The information stored in the store 360 is therefore used during this second half of the second cycle. The n-bit address portion is used to select the corresponding directory location once again. This time, it is the control signals C which are important. The stored level signal from the store 360 is used to change the full/ empty signal for the relevant level from full to empty. Thus the cache has had the invalid address effectively cleared from it, since with the control signal for that address being set to empty, the cache will no longer respond to a call for that address.

The clearing of invalid addresses thus occupies the second halves of either 2 or 1 cache cycles depending on whether or not the invalid address is the cache.

Of course, this process becomes different in the event of a CPU address not being in the cache. The cache first half cycle (directory search) then results in a miss. The CPU then has to wait for the required word to be accessed from main memory. This affords plenty of time for the second half of any invalid address clearing operation to be performed. Indeed, invalid address clearing may be permitted to run continuously during this waiting time for main memory access if desired. If this is done, it is preferable for the address clearing to be interrupted when the main memory access is achieved. An invalid address which has been found in the cache but not yet cleared can be stored in the way described by means of store 360, awaiting the next cache second half cycle.

Should the invalid address clearing be delayed to the point where one of the stacks STK1 and STK2 overflows, a complete flush of the cache can be performed, with its entire contents being cleared, so that it refills from the main memory with data which obviously must match that in main memory.

## Claims

1. A cache memory (CMU1) operable in a cycle of two sequential phases comprising a directory (202) to which a desired address may be applied in the first phase to determine whether or not the word with that address is stored in the cache memory, and a cache store (201) in which the word may then be accessed in the second phase if it has been found that the word is stored in the cache memory, characterized by means (322A, 360) for searching the directory for invalid addresses (from STK1, STK2) for the purpose of clearing said invalid addresses during the second phase of the cache cycle when the access of desired words from the cache store takes place for which function the directory is idle.

2. A cache memory according to claim 1, characterized in that the directory includes full/ empty bits indicative of whether the words in the cache store are accessible or not, said means (322A, 360) setting the full/empty bit of an invalid address found in the cache memory to empty.

3. A cache memory according to claim 1 or claim 2, characterized in that, when a succession of words are being accessed from the cache memory, the time during which one word is being accessed from the cache store is used for searching the directory (202) for a invalid address and, if that address is found, the time during which the next word is being accessed from the cache store is used for clearing that invalid address from the directory.

## Patentansprüche

1. In einem Zyklus von zwei aufeinanderfolgenden Phasen betreibbare Cache-Speichervorrichtung (CMU1), die ein Verzeichnis (202) umfaßt, dem in der ersten Phase eine gewünschte Adresse zugeführt werden kann zur Bestimmung, ob das Wort mit dieser Adresse in der Cache-Speichervorrichtung gespeichert ist oder nicht, und die einen Cache-Datenspeicher (201) umfaßt, in dem dann in der zweiten Phase auf dieses Wort zugegriffen werden kann, wenn dieses Wort als in der Cache-Speichervorrichtung gespeichert ermittelt worden ist, gekennzeichnet durch, Einrichtungen (322A, 360) zur Durchsuchung des Verzeichnisses auf ungültige Adressen (von STK1, STK2) zum Zwecke des Löschens der genannten ungültigen Adressen während der zweiten Cachezyklusphase, wenn der Zugriff auf die gewünschten Worte im Cache-Datenspeicher erfolgt, für welche Funktion das Verzeichnis unbenutzt ist.

2. Cache-Speichervorrichtung nach Anspruch 1, dadurch gekennzeichnet, daß in dem Verzeichnis "Voll"/"Leer"-Anzeigebits vorhanden sind zur Anzeige, ob auf die Worte in dem Cache-Datenspeicher ein Zugriff möglich ist oder nicht, wobei die genannten Einrichtungen (322A, 360) das "Voll"/"Leer"-Anzeigebit einer in dem Cachespeicher gefundenen ungültigen Adresse in den "Leer"-Anzeigezustand versetzen.

3. Cache-Speichervorrichtung nach Anspruch 1 oder Anspruch 2, dadurch gekennzeichnet, daß beim Abruf einer Wortfolge aus dem Cachespeicher die Zeit, während der ein Wort aus dem Cachespeicher abgerufen wird, zur Durchsuchung des Verzeichnisses (202) auf eine ungültige Adresse benutzt wird, und beim Auffinden einer solchen Adresse die Zeit, während der das nächste Wort aus dem Cachespeicher abgerufen wird, zur Löschung dieser Adresse im Verzeichnis benutzt wird.

**Revendications**

1. Une mémoire cache MC1 pouvant fonctionner sur un cycle de deux phase séquentielles, comprenant un répertoire (202) auquel peut être appliquée une adresse désirée, dans la première phase, pour déterminer si le mot ayant cette adresse est ou n'est pas enregistré dans la mémoire cache et une sauvegarde de cache (201) dans lequelle le mot peut ensuite être recherché dans la seconde phase, s'il est aparu que le mot est enregistré dans la mémoire cache, caractérisée par des dispositifs (322A, 360) pour rechercher le répertoire des adresses invalides (à partir de P1, P2) dans le but d'effacer lesdites adresses invalides pendant la seconde phase du cycle de cache lorsque la sauvegarde de cache accède aux mots désirés, fonction pour laquelle le répertoire est inactif.

2. Une mémoire cache d'après la revendication 1, caractérisée par le fait que le répertoire comprend des bits plein/vide indiquant si les mots dans la sauvegarde de cache sont accessibles ou non, lesdits dispositifs (322A, 360) mettant le bit plein/vide d'une adresse invalide trouvée dans la mémoire cache à l'état vide.

3. Une mémoire cache d'après la revendication 1 ou la revendication 2, caractérisée par le fait que, lorsqu'une succession de mots est recherchée par la mémoire cache, le temps pendant lequel un mot est recherché par la sauvegarde de cache est utilisé pour rechercher dans le répertoire (202) une adresse invalide et, si cette adresse est trouvée, le temps pendant lequel le mot suivant est recherché par la sauvegarde de cache est usilisé pour effacer cette adresse invalide du répertoire.

*FIG.1*

*FIG.2*

FIG.3